# EUROPEAN PATENT APPLICATION

(11) **EP 4 439 744 A1**
(43) Date of publication of application: **02.10.2024**
(21) Application number: 22916481.9
(22) Date of filing: 01.12.2022
(51) Int. Cl.: H01M 8/1004, H01M 8/242, H01M 4/88

(54) **MEMBRANE-ELECTRODE ASSEMBLY AND FUEL CELL COMPRISING SAME**

(30) Priority: 28.12.2021 KR 20210190343
(71) Applicant: Kolon Industries, Inc., Seoul 07793 (KR)
(72) Inventor: CHO, Dong Jun, Seoul 07793 (KR)
(74) Representative: Ter Meer Steinmeister & Partner
(86) International application number: PCT/KR2022/019415
(87) International publication number: WO 2023/128335

(57) **Abstract**

The present invention relates to a membrane-electrode assembly and a fuel cell comprising the same and, more specifically, to a membrane-electrode assembly and a fuel cell comprising the same, the membrane-electrode assembly comprising: a polymer electrolyte membrane; a sub-gasket formed to cover the circumferential portion of the polymer electrolyte membrane; and electrode layer formed on the central portion of the polymer electrolyte membrane while being spaced apart from the sub-gasket; an adhesive part formed between the sub-gasket and the electrode layer and on the polymer electrolyte membrane; and a gas diffusion layer formed on the electrode layer and the adhesive part, whereby the durability and catalyst usage rate of the membrane-electrode assembly are improved.

## Description

### [TECHNICAL FIELD]

The present disclosure relates to a membrane-electrode assembly and a fuel cell including the same.

### [BACKGROUND ART]

Fuel cells are batteries including a power generation system that directly converts chemical reaction energy, such as the oxidation/reduction reaction of hydrogen and oxygen contained in hydrocarbon-based fuel materials such as methanol, ethanol, and natural gas, into electrical energy, and are in the limelight as a next-generation clean energy source that can replace fossil energy due to their eco-friendly characteristics of high-energy efficiency and low pollutant emissions.

Since such fuel cells have the advantage of being able to produce a wide range of output through a stack configuration by stacking unit cells, and have energy densities that are 4 to 10 times those of small lithium batteries, they are attracting attention as small and mobile portable power sources.

A stack that actually generates electricity in a fuel cell has a structure in which several to dozens of unit cells composed of a membrane-electrode assembly (MEA) and a separator (also called a bipolar plate) are stacked, and the membrane-electrode assembly generally has a structure in which an oxidation electrode (anode or fuel electrode) and a reduction electrode (cathode or air electrode) are formed at both sides of the electrolyte membrane in a state that an electrolyte membrane is therebetween.

Fuel cells can be classified into alkaline electrolyte fuel cells and polymer electrolyte membrane fuel cells (PEMFC), etc., depending on the state and type of electrolyte, and the polymer electrolyte membrane fuel cells among them are in the limelight as portable, automotive, and home power supply devices due to their advantages such as a low operating temperature of less than 100°C, fast start-up and response characteristics, excellent durability, etc.

Representative examples of the polymer electrolyte membrane fuel cells may include a proton exchange membrane fuel cell (PEMFC), which uses hydrogen gas as fuel, and a direct methanol fuel cell (DMFC), which uses liquid methanol as fuel.

To summarize the reactions that occur in a polymer electrolyte membrane fuel cell, first, when fuel such as hydrogen gas is supplied to the oxidation electrode, hydrogen ions (H⁺) and electrons (e⁻) are generated at the oxidation electrode by an oxidation reaction of hydrogen. The generated hydrogen ions are transferred to the reduction electrode through the polymer electrolyte membrane, and the generated electrons are transferred to the reduction electrode through an external circuit. Oxygen is supplied from the reduction electrode, and oxygen is bonded to hydrogen ions and electrons to produce water by a reduction reaction of oxygen.

Meanwhile, in order to apply fuel cells to fuel cell vehicles (FCV), miniaturization of the fuel cell system is essential, and for this, it is required to develop a membrane-electrode assembly (hereinafter referred to as 'MEA') that can exhibit excellent power density per unit area, and it is necessary to increase the durability of the MEA catalyst layer particularly for practical operation of FCV

The structure of a general 5-layer MEA is formed in a structure in which an active region-perforated sub-gasket is bonded onto a catalyst coated membrane in which a PEM and an electrode are combined. Further, a 7-layer MEA is formed in a structure in which adhesive is applied onto the sub-gasket around the active region and the gas diffusion layer (GDL) is bonded thereto.

However, the structure of the conventional MEA has accelerated deterioration due to the stress concentration phenomenon caused by the step height in the GDL joint and a stack contamination problem due to GDL particles, has problems of detachment possibility and reduced durability during long-term operation of the MEA due to the low bonding force of the sub-gasket and electrode, and has a possibility of increased resistance and occurrence of water trap sites due to decreased adhesion between the electrode and GDL in the active region due to the step height, and there is a problem of reduced catalyst usage rate due to the adhesive applied to the active region part of the electrode layer.

### [DETAILED DESCRIPTION OF INVENTION]

### [TECHNICAL PROBLEMS]

An object of the present disclosure is to provide a membrane-electrode assembly in which the problems occurring in the conventional MEA are improved.

Another object of the present disclosure is to provide a fuel cell with improved performance and durability by applying the membrane-electrode assembly.

### [TECHNICAL SOLUTION]

One embodiment of the present disclosure for achieving the above object provides a membrane-electrode assembly including: a polymer electrolyte membrane; a sub-gasket formed while enveloping a portion of the polymer electrolyte membrane; an electrode layer formed to be spaced apart from the sub-gasket on another portion of the polymer electrolyte membrane; an adhesive part interposed between the sub-gasket and the electrode layer and formed on another portion of the polymer electrolyte membrane; and a gas diffusion layer formed on the electrode layer and the adhesive part. Specifically, the adhesive part may be in contact with all of another portion of the polymer electrolyte membrane, the sub-gasket, the electrode layer, and the gas diffusion layer, respectively. More specifically, the sub-gasket may be in contact with a portion of the polymer electrolyte membrane.

In order to achieve the above object, a membrane-electrode assembly (MEA) according to one embodiment of the present disclosure includes a polymer electrolyte membrane, a sub-gasket formed while enveloping a peripheral portion of the polymer electrolyte membrane, an electrode layer formed to be spaced apart from the sub-gasket in a central portion of the polymer electrolyte membrane, an adhesive part formed between the sub-gasket and the electrode layer and on the polymer electrolyte membrane, and a gas diffusion layer formed on the electrode layer and the adhesive part. Specifically, the sub-gasket may envelop a portion of the peripheral portion of the polymer electrolyte membrane. For example, a portion of the peripheral portion of the polymer electrolyte membrane may be the remainder excluding the edge of the polymer electrolyte membrane that is in contact with both the electrode layer and the adhesive part.

The adhesive part may be in contact with all of the polymer electrolyte membrane, the sub-gasket, the electrode layer, and the gas diffusion layer, respectively.

The sub-gasket may be in contact with the polymer electrolyte membrane. Specifically, the sub-gasket may be in contact with a portion of the polymer electrolyte membrane, and more specifically, may be in contact with a portion of the peripheral portion of the polymer electrolyte membrane.

The electrode layer and the adhesive part may be formed to the same thickness on the polymer electrolyte membrane.

The gas diffusion layer may be in contact with the electrode layer.

A portion of the adhesive material forming the adhesive part may be a form in which it is absorbed into a portion of the gas diffusion layer.

The adhesive part may be formed of an adhesive material containing one or more inorganic additives of ceria and iridium oxide.

The sub-gasket, the electrode layer, the adhesive part, and the gas diffusion layer may be formed on both surfaces of the polymer electrolyte membrane, respectively.

A fuel cell according to another embodiment of the present disclosure includes the membrane-electrode assembly.

### [EFFECT OF INVENTION]

The membrane-electrode assembly according to one aspect of the present disclosure allows the sub-gasket to be directly bonded to the polymer electrolyte membrane so that the problem of a low bonding force due to bonding of the sub-gasket and the electrode can be solved, thereby having an effect of solving the problems of detachment and durability deterioration of the conventional MEA.

The structure of the membrane-electrode assembly according to another aspect of the present disclosure has effects of solving accelerated MEA deterioration due to stress concentration and stack contamination problem by particles in the gas diffusion layer since no step height is present in the gas diffusion layer and stress is not concentrated.

The membrane-electrode assembly according to another aspect of the present disclosure facilitates stack water management due to excellent adhesion between the electrode and the gas diffusion layer, and has the characteristics of having a high catalyst usage rate in the electrode since there is no need to apply a separate adhesive material to the electrode.

### [BRIEF DESCRIPTION OF THE DRAWING]

FIG. 1 schematically shows a cross-sectional view of a membrane-electrode assembly according to one embodiment of the present disclosure.
FIG. 2 is a schematic diagram showing the overall configuration of the fuel cell.

### [BEST MODE FOR CARRYING OUT THE INVENTION]

Hereinafter, embodiments of the present disclosure will be described in detail with reference to the drawings so that those skilled in the art to which the present disclosure pertains can easily implement the present disclosure. However, the present disclosure may be implemented in many different forms and is not limited to the embodiments described herein.

Prior to this, the terms or words used in this specification and claims should not be construed as limited to their usual or dictionary meanings, and they must be interpreted as meanings and concepts consistent with the technical idea of the present disclosure based on the principle that the inventor can appropriately define the concept of terms in order to explain his or her invention in the best way.

Therefore, since the embodiments described in this specification and the configurations shown in the drawings are only one of the most preferred embodiments of the present disclosure and do not represent the entire technical idea of the present disclosure, it should be understood that various equivalents and variations capable of replacing them at the time of filing this application may exist.

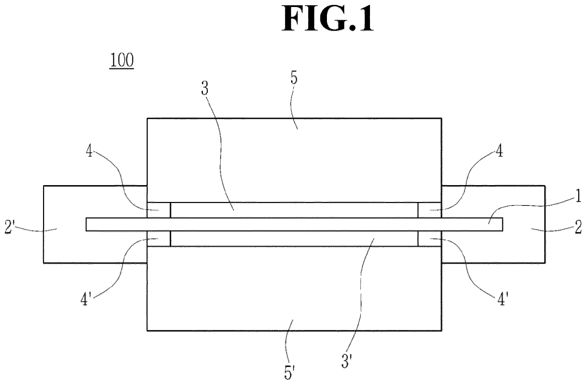

FIG. 1 shows a cross section of a membrane-electrode assembly according to one embodiment of the present disclosure. Referring to and explaining FIG. 1, the membrane-electrode assembly 100 according to one embodiment of the present disclosure includes a polymer electrolyte membrane 1, sub-gaskets 2 and 2' formed while enveloping the peripheral portion of the polymer electrolyte membrane 1, an electrode layer 3 formed to be spaced apart from the sub-gaskets 2 and 2' in the central portion of the polymer electrolyte membrane 1, an adhesive part 4 formed between the sub-gaskets 2 and 2' and the electrode layer 3 and on the polymer electrolyte membrane 1, and a gas diffusion layer 5 formed on the electrode layer 3 and the adhesive part 4. The membrane-electrode assembly according to the embodiment of the present disclosure is a structure in which step heights due to the gas diffusion layer may not exist, and can prevent performance degradation and durability deterioration of the membrane-electrode assembly caused by step heights due to the conventional gas diffusion layer, and has characteristics of improved durability and performance compared to the membrane-electrode assembly included in conventional fuel cells. The adhesive part 4 may be formed by introducing an adhesive material into the exposed part of the polymer electrolyte membrane 1 between the electrode layer 3 and the sub-gaskets 2 and 2', covering the gas diffusion layer 5, and then curing it, and the adhesive part 4 is bonded to all of the polymer electrolyte membrane 1, the sub-gasket 2, the electrode layer 3, and the gas diffusion layer 5, respectively, so that excellent durability of the membrane-electrode assembly may be realized.

The sub-gaskets 2 and 2' are formed while enveloping the peripheral portion of the electrolyte membrane, and specifically, the sub-gaskets may be in direct contact with the polymer electrolyte membrane. When the sub-gaskets are in contact with the polymer electrolyte membrane, it is possible to realize excellent bonding force compared to when the sub-gaskets are in contact with the electrode. Therefore, in the case of a fuel cell including the membrane-electrode assembly according to the embodiment of the present disclosure, the possibility of detachment during long-term operation can be greatly reduced and high durability can be exhibited compared to the case where the sub-gaskets and the electrode are in contact.

The adhesive part 4 should be formed in the gap between the electrode layer 3 and the sub-gasket 2, and the adhesive part 4 should be formed in a form in which the entire edge of the electrode layer 3 is continuously sealed so that the durability of the membrane-electrode assembly is desirably improved through prevention of leakage and improvement of the adhesion of the gas diffusion layer 5. At this time, the width of the adhesive part 4 may be the same as the width of the gap between the electrode layer 3 and the sub-gasket 2, and at this time, considering the area of the electrode layer 3 and the thickness (weight) of the gas diffusion layer 5 together, the gap width (width of the adhesive part) between the electrode layer and the sub-gasket may be determined, and for example, the width of the adhesive part 4 may be formed to 1 to 5 mm.

In the process of forming the adhesive part 4 by applying an adhesive material to the exposed part of the polymer electrolyte membrane 1 between the electrode layer 3 and the sub-gasket 2, it is desirable to form the adhesive part 4 so that the height of the adhesive part 4 is the same as that of the electrode layer 3 based on the surface of the polymer electrolyte membrane 1. When the height of the adhesive part 4 is formed to be lower than that of the electrode layer 3, a gap may be created between the adhesive part 4 and the gas diffusion layer 5 to cause a problem of decreasing the durability of the membrane-electrode assembly to occur, and when the height of the adhesive part 4 is formed to be higher than that of the electrode layer 3, a gap may be created between the electrode layer 3 and the gas diffusion layer 5 to cause problems of increasing the resistance of the membrane-electrode assembly and reducing the efficiency of the fuel cell including the membrane-electrode assembly to occur.

The gas diffusion layer 5 in contact with the electrode layer 3 can lower the resistance value of the membrane-electrode assembly, and a water trap site occurring when water generated according to fuel cell operation accumulates inside the membrane-electrode assembly can be prevented. Referring to FIG. 1, for the purpose of the configuration in which the gas diffusion layer 5 is in contact with the electrode layer 3, it is preferable that the gas diffusion layer 5 is formed only on the polymer electrolyte membrane where the sub-gaskets 2 and 2' are not formed, and the gas diffusion layer 5 can be stably in contact with the membrane-electrode assembly 100 by the adhesive part 4 while it is being in contact with the electrode layer 3.

Since a separate adhesive part 4 has been formed between the sub-gasket 2 and the electrode layer 3 in the structure of the membrane-electrode assembly according to the embodiment of the present disclosure, there is no need to apply an adhesive material on the sub-gasket or electrode layer in order to fix the gas diffusion layer 5. When an adhesive material is applied on the sub-gasket and thus the sub-gasket and the gas diffusion layer are bonded, a space is created between the electrode and the gas diffusion layer, which may deteriorate the performance of the membrane-electrode assembly, and when an adhesive material is applied on the electrode layer, the adhesive material seeps into the interior of the electrode layer so that there may be problems of impairing the efficiency of the catalyst contained in the electrode layer, and reducing the active region portion of the electrode layer. Therefore, the membrane-electrode assembly structure of the present disclosure has the effect capable of improving the durability and performance of the fuel cell through the arrangement of a separate adhesive layer.

A process of bringing the gas diffusion layer into close contact with the electrode layer after introducing an adhesive material onto the polymer electrolyte membrane exposed between the electrode layer and the sub-gasket with a thickness slightly higher than the height of the electrode layer may allow a portion of the adhesive material to be absorbed as a portion of the gas diffusion layer. When a portion of the adhesive material is absorbed and hardened as a portion of the gas diffusion layer, the adhesive part 4 can more firmly fix the gas diffusion layer 5, and the durability of the membrane-electrode assembly can be further improved. Adhesives can be introduced in a variety of ways, such as coating, dispensing, transfer, UV exposure, or solid type, and are not particularly limited.

Although it is not particularly limited if the adhesive material forming the adhesive part 4 is a material that does not have unnecessary chemical/physical reactions with the materials constituting the membrane-electrode assembly and is durable enough to withstand long-term operation in a high temperature and humid environment of 100°C or less, it may additionally include one or more inorganic additives of ceria and iridium oxide. When an inorganic additive is introduced into the adhesive part, the durability of the membrane-electrode assembly can be further improved.

Referring to FIG. 1, the membrane-electrode assembly according to the embodiment of the present disclosure may be a structure in which the structures of the polymer electrolyte membrane, sub-gasket, electrode layer, adhesive part, and gas diffusion layer are not limited to one surface of the polymer electrolyte membrane, but are formed on both surfaces of the polymer electrolyte membrane, respectively.

Referring to FIG. 1, the electrode layer 3 which is disposed on one surface of the polymer electrolyte membrane 1 to separate the fuel transferred from the gas diffusion layer 5 into hydrogen ions and electrons and cause an oxidation reaction is called an anode electrode, and the electrode layer 3' which is disposed on the other surface of the polymer electrolyte membrane 1 to cause a reduction reaction generating water from the hydrogen ions supplied through the polymer electrolyte membrane 1 and the oxidizing agent transferred to the gas diffusion layer 5' is called a cathode electrode.

The polymer electrolyte membrane 1 and the electrode layers 3 and 3' contain an ionomer, and the ionomer may include one or more types of ionomers selected from the group consisting of fluorine-based ionomers and hydrocarbon-based ionomers. The hydrocarbon-based ionomers may include all publicly known hydrocarbon-based polymers, for example, sulfonated derivatives of poly(arylene ether)s (SPAEs), poly(arylene sulfide)s (SPASs), polyimides (SPIs), polybenzimidazoles (PBIs), polyphenylenes (PPs), and polyetheretherketone (PEEK). In addition, the fluorine-based polymers may include all publicly known fluorine-based polymers, for example, perfluorinated sulfonic acid, polyvinylidene fluoride, hexafluoropropylene, trifluoroethylene, polytetrafluoroethylene, or one of their copolymers.

However, the ionomer can be used alone or in the form of a mixture. In addition, it may optionally be used together with a non-conductive compound to further improve the adhesion between the polymer electrolyte membrane 1 and the electrode layers 3 and 3'. It is desirable to adjust the amount used thereof to suit the purpose of use before using.

The non-conductive compound may include one or more selected from the group consisting of polytetrafluoroethylene (PTFE), tetrafluoroethylene-hexafluoropropylene copolymer (FEP), tetrafluoroethylene-perfluoroalkyl vinyl ether copolymer (PFA), ethylene tetrafluoroethylene (ETFE), ethylenechlorotrifluoroethylene copolymer (ECTFE), polyvinylidene fluoride, polyvinylidene fluoride-hexafluoropropylene copolymer (PVdF-HFP), dodecylbenzenesulfonic acid, and sorbitol.

The electrode layers 3 and 3' contain a catalyst. As a catalyst, any catalyst that participates in the reaction of the battery and can be normally used as a catalyst in a fuel cell can be used. Specifically, a platinum-based metal can be preferably used.

The platinum-based metal may include one selected from the group consisting of platinum (Pt), palladium (Pd), ruthenium (Ru), iridium (Ir), osmium (Os), platinum-M alloys (where M is one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), non-platinum alloys, and combinations thereof. More preferably, the platinum-based metal may include a combination of two or more metals selected from the above-described platinum-based catalyst metal group, but is not limited thereto, and any platinum-based catalyst metal that can be used in the present technical field can be used without limitation.

Specifically, the platinum alloys may include one or mixtures of two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and combinations thereof.

Additionally, the non-platinum alloys may include one or mixtures of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir- Ru-Os, Rh-Ru-Fe, Rh-Ru-Os, and combinations thereof.

Such a catalyst can be used as the catalyst itself (black) or can be used by supporting it on a carrier. The carrier may be selected from carbon-based carriers, porous inorganic oxides such as zirconia, alumina, titania, silica, and ceria, and zeolite. The carbon-based carriers may be selected from graphite, super P, carbon fiber, carbon sheet, carbon black, Ketjen Black, Denka black, acetylene black, carbon nano tube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, and combinations of one or more thereof, but are not limited thereto, and any carrier available in the present technical field may be used without limitation.

Catalyst particles may be located on the surface of the carrier or may penetrate into the carrier while filling the internal pores of the carrier.

When using a precious metal supported on a carrier as a catalyst, a commercially available catalyst can be used, or it can also be manufactured and used by supporting the precious metal on a carrier. Since the process of supporting a precious metal on a carrier is widely known content in the relevant field, even if detailed description is omitted in this specification, it is a content that can be easily understood by those working in the field.

The gas diffusion layers 5 and 5' may include a porous conductive substrate so that hydrogen or oxygen can be smoothly supplied thereto. A representative example thereof may include carbon paper, carbon cloth, carbon felt, or metal cloth (a porous film made of a metal cloth in the fiber state or a metal film formed on the surface of a cloth made of polymer fibers), but is not limited thereto. In addition, it is preferable to use gas diffusion layers 5 and 5' that are water repellent treated with fluorine-based resins to prevent reactant diffusion efficiency from being reduced by water generated during operation of the fuel cell. The fluorine-based resins may include polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or copolymers thereof.

In addition, a microporous layer may be further included to enhance the diffusion effect of reactants in the gas diffusion layers 5 and 5'. This microporous layer may generally contain a conductive powder with a small particle diameter, for example, carbon powder, carbon black, acetylene black, active carbon, carbon fiber, fullerene, carbon nanotube, carbon nanowire, carbon nanohorn, or carbon nanoring.

The microporous layer is manufactured by coating an electrode substrate with a composition comprising a conductive powder, a binder resin, and a solvent. The binder resin may preferably include polytetrafluoroethylene, polyvinylidene fluoride, polyhexafluoropropylene, polyperfluoroalkyl vinyl ether, polyperfluorosulfonyl fluoride, alkoxyvinyl ether, polyvinyl alcohol, cellulose acetate, or copolymers thereof. The solvent may preferably include alcohols such as ethanol, isopropyl alcohol, n-propyl alcohol, butyl alcohol, and the like, water, dimethylacetamide, dimethyl sulfoxide, N-methylpyrrolidone, tetrahydrofuran, etc.

A fuel cell according to another embodiment of the present disclosure includes a membrane-electrode assembly according to one embodiment of the present disclosure.

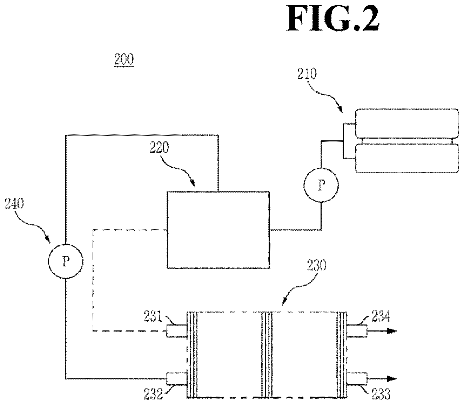

FIG. 2 is a schematic diagram showing the overall configuration of the fuel cell.

Referring to FIG. 2, the fuel cell 200 includes a fuel supply unit 210 that supplies a mixed fuel in which fuel and water are mixed, a reforming unit 220 that reforms the mixed fuel to generate a reformed gas containing hydrogen gas, a stack 230 in which the reformed gas containing hydrogen gas supplied from the reforming unit 220 causes an electrochemical reaction with an oxidizing agent to generate electrical energy, and an oxidizing agent supply unit 240 supplying the oxidizing agent to the reforming unit 220 and the stack 230.

The stack 230 is provided with a plurality of unit cells that generate electrical energy by inducing an oxidation/reduction reaction between the reformed gas containing hydrogen gas supplied from the reforming unit 220 and the oxidizing agent supplied from the oxidizing agent supply unit 240.

Each of the unit cells refers to a unit cell that generates electricity, and includes a membrane-electrode assembly that oxidizes/reduces oxygen in the hydrogen gas-containing reformed gas and the oxidizing agent, and separators (or called bipolar plates, hereinafter referred to as 'separators') for supplying the hydrogen gas-containing reformed gas and the oxidizing agent to the membrane-electrode assembly. The separators are disposed on both sides thereof in a state that the membrane-electrode assembly is placed at the center. At this time, the separators located on the outermost sides of the stack may be particularly called end plates.

Among the separators, an end plate is provided with a pipe-shaped first supply pipe 231 for injecting reformed gas containing hydrogen gas supplied from the reforming unit 220, and a pipe-shaped second supply pipe 232 for injecting oxygen gas, and the other end plate is provided with a first discharge pipe 233 for discharging to the outside the reformed gas containing the hydrogen gas that is ultimately unreacted and remaining in the plurality of unit cells, and a second discharge pipe 234 for discharging to the outside the oxidizing agent that is ultimately unreacted and remaining in the above-described unit cells.

In the fuel cell, since the separator, fuel supply unit, and oxidizing agent supply unit constituting the electricity generation unit are used in a typical fuel cell except that the membrane-electrode assembly 100 according to one embodiment of the present disclosure is used, detailed description is omitted in this specification.

Although the preferred embodiments of the present disclosure have been described in detail above, the scope of rights of the present disclosure is not limited thereto, and various modifications and improved forms of those skilled in the art using the basic concept of the present disclosure defined in the following claims also fall within the scope of the rights of the present disclosure.

### <Explanation of reference numerals>

| | | | |
|---|---|---|---|
| 100: | Membrane-electrode assembly | 1: | Polymer electrolyte membrane |
| 2, 2': | Sub-gasket | 3, 3': | Electrode layer |
| 4, 4': | Adhesive part | 5, 5': | Gas diffusion layer |
| 200: | Fuel cell | 210: | Fuel supply unit |
| 220: | Reforming unit | 230: | Stack |
| 231: | First supply pipe | 232: | Second supply pipe |
| 233: | First discharge pipe | 234: | Second discharge pipe |
| 240: | Oxidizing agent supply unit | | |

## Claims

1. A membrane-electrode assembly comprising:
a polymer electrolyte membrane;
a sub-gasket formed while enveloping a portion of the polymer electrolyte membrane;
an electrode layer formed to be spaced apart from the sub-gasket on another portion of the polymer electrolyte membrane;
an adhesive part interposed between the sub-gasket and the electrode layer and formed on another portion of the polymer electrolyte membrane; and
a gas diffusion layer formed on the electrode layer and the adhesive part.

2. The membrane-electrode assembly of claim 1, wherein the adhesive part is in contact with all of another portion of the polymer electrolyte membrane, the sub-gasket, the electrode layer, and the gas diffusion layer, respectively.

3. The membrane-electrode assembly of claim 1, wherein the sub-gasket is in contact with a portion of the polymer electrolyte membrane.

4. The membrane-electrode assembly of claim 1, wherein the electrode layer and the adhesive part are formed to the same thickness on the polymer electrolyte.

5. The membrane-electrode assembly of claim 1, wherein the gas diffusion layer is in contact with the electrode layer.

6. The membrane-electrode assembly of claim 1, wherein a portion of the adhesive material forming the adhesive part is a form in which it is absorbed into a portion of the gas diffusion layer.

7. The membrane-electrode assembly of claim 1, wherein the adhesive part is formed of an adhesive material containing one or more inorganic additives of ceria and iridium oxide.

8. The membrane-electrode assembly of claim 1, wherein the sub-gasket, the electrode layer, the adhesive part, and the gas diffusion layer are formed on both surfaces of the polymer electrolyte membrane, respectively.

9. A fuel cell comprising the membrane-electrode assembly of claim 1.
